# EUROPÄISCHE PATENTANMELDUNG

(11) **EP 0 621 444 A1**
(43) Veröffentlichungstag der Anmeldung: **26.10.1994**
(21) Anmeldenummer: 93106398.6
(22) Anmeldetag: 20.04.1993
(51) Int. Cl.: F21V 21/02, F21V 17/00, F16B 5/10

(54) **Schnellverschluss für Leuchteneinsätze**

(71) Anmelder: SIEMENS AKTIENGESELLSCHAFT, D-80333 München (DE)
(72) Erfinder: Brüggemann, Jürgen, W-8225 Traunreut (DE); Zahnbrecher, Helmuth, W-8221 Palling (DE); Witt, Daniel, W-8210 Prien (DE)

(57) **Zusammenfassung**

Der Schnellverschluß (1) zum lösbaren Befestigen von Leuchtenelementen (3) (Leuchteneinsätzen) an einem tragenden Element (2) (Tragschiene eines Lichtbandes) ist drehbeweglich in dem Leuchtenelement gelagert und besitzt Rastmittel (12, 13, 14), die sich beim Aufsetzen des Leuchtenelementes auf das tragende Element selbsttätig entgegen ihrer Verriegelungsrichtung vorspannen und in Einbaulage des Leuchtenelementes und damit Freigabe der Raststellung selbsttätig einrasten. Es ist ein multifunktionales Federelement (12) zum Befestigen des Schnellverschlusses im Leuchtenelement sowie zum Aufbringen der Kräfte für Drehbewegungen und Sicherung der Rastpositionen vorgesehen.

## Beschreibung

Die Erfindung bezieht sich auf einen Schnellverschluß für Leuchteneinsätze, insbesondere in Lichtbandanordnung gemäß dem Oberbegriff des Patentanspruches 1.

In der Beleuchtungstechnik sind viele Anwendungsfälle bekannt, bei denen einzelne Leuchten zu kompletten Beleuchtungssystemen zusammengesetzt werden, um bei entsprechenden Raumverhältnissen die jeweilige Beleuchtungsaufgabe sachgerecht zu lösen. In solchen Fällen ist es häufig üblich, die einzelnen Leuchten an einem tragenden Element zu montieren, das seinerseits an einer Raumdecke abgehängt bzw. unmittelbar daran befestigt ist. Ein spezifisches Beispiel für derartige geschlossene Leuchtenanordnungen sind die sogenannten Lichtbänder, die vorwiegend im gewerblichen Bereich Anwendung finden. Bei einem solchen Lichtband werden Tragschienen als tragende Elemente eingesetzt, die beliebig zusammensetzbar sind. Die einzelnen Leuchten werden in Form von sogenannten Leuchteneinsätzen zusammen mit entsprechenden Reflektoren aneinandergereiht an dieser Tragschiene festgelegt, um ein geschlossenes Lichtband zu bilden. Da solche Lichtbandanordnungen vorwiegend im gewerblichen Bereich Anwendung finden, müssen sie gegebenenfalls auch bestimmten Schutzarten genügen, beispielsweise häufig staubsicher gegebenenfalls sogar staubdicht sein. Bei der Vielzahl von einzelnen zu einem Lichtband zusammengesetzten Leuchteneinsätzen ist es auch von wesentlicher Bedeutung, die Lichtbandanordnung einfach, schnell, dabei sicher und möglichst werkzeuglos montieren zu können. Ebenso ist es aus Wartungsgründen erforderlich, den Aufbau des Lichtbandes so zu gestalten, daß Einzelteile leicht zugänglich und demontierbar sind, es müssen ausgebrannte Lampen ausgewechselt werden, gegebenenfalls sind Reflektoren zu reinigen oder auszutauschen und dergleichen.

Bei bekannten Lichtbandanordnungen, wie beispielsweise dem in "Siemens-Leuchtenkatalog '90", u. a. Seiten 144 bis 146 dargestellten DUS Rapid System werden zum Zwecke einer einfachen Montage und Demontage individueller Leuchteneinsätze eines Lichtbandes Schnellverschlüsse verwendet, die sich von Hand verriegeln und entriegeln lassen, um einen Leuchteneinsatz sowie den zugehörigen Reflektor an der Tragschiene des Lichtbandes werkzeuglos zu befestigen. Diese Schnellverschlüsse besitzen einen flach geformten Drehknopf, der drehbeweglich in einer Bodenplatte der Tragschiene gelagert ist. Der Schnellverschluß besitzt zwei, zueinander um 90° versetzte Raststellungen, die durch eine im Innern der Tragschiene auf der Bodenplatte aufliegende und mit dem Drehknopf fest verbundene Rastscheibe mit entsprechenden Rastelementen gesichert werden. Diese Schnellverschlüsse sind in festgelegten Abständen an der Tragschiene montiert. Zur Montage eines Leuchteneinsatzes mit einer Bodenplatte als tragendem Element sind in diese Bodenplatte kleine Ausschnitte ausgestanzt, deren Abstände auf das Rastermaß der Schnellverschlüsse an der Tragschiene abgestimmt sind. Diese Ausschnitte sind so ausgeformt, daß der abgeflachte Drehknopf eines Schnellverschlusses hindurchgesteckt werden kann.

Zur Montage der Leuchteneinsätze werden die Schnellverschlüsse in eine der beiden Raststellungen gedreht, so daß die Position des flachen Drehknopfes mit der Richtung der Ausschnitte in den Leuchteneinsätzen übereinstimmt. Dann kann der Leuchteneinsatz an die Tragschiene angesetzt und durch eine 90°-Drehung der Schnellverschlüsse festgelegt werden. Bei diesem bekannten Lichtband ist es typisch, daß die Leuchteneinsätze zunächst ohne aufgesetzte Reflektoren montiert werden. Diese werden erst in einem zweiten Montageschritt an dem Lichtband befestigt. Dazu besitzen die Reflektoren ebensolche Ausschnitte für die Drehknöpfe der Schnellverschlüsse. Allerdings sind diese Ausschnitte gegenüber denen der Leuchteneinsatze um 90° gedreht, so daß sich die Reflektoren an die bereits montierten Leuchteneinsätze ansetzen lassen, wobei die Drehköpfe durch die Reflektorfläche hindurchtreten und dann wiederum zum Befestigen der Reflektoren um 90° gedreht werden.

Die bekannte Lösung für die Montage von Leuchteneinsätzen an der Tragschiene eines Lichtbandes mittels eines derartigen Schnellverschlusses ist einfach und sicher, sie ist auch kostengünstig, da die bekannten Schnellverschlüsse sehr einfach aufgebaut sind. Die bekannte, auf den ersten Blick bestechende Lösung hat aber den Nachteil, daß sie dennoch nicht ausreichend montagefreundlich ist. Bedenkt man, daß Lichtbänder häufig in Fertigungsstätten eingesetzt werden und in einer entsprechenden Höhe über dem Boden zu montieren oder montiert sind, so erweist es sich als ungünstig, daß immer zwei getrennte Montageschritte erforderlich sind, um eine komplette Leuchte am Lichtband zu montieren. Für den Monteur oder das Wartungspersonal wäre es wesentlich bequemer, wenn diese starre Montagefolge im System nicht vorgegeben wäre und Reflektor und Leuchteneinsatz gemeinsam montiert bzw. von der Tragschiene des Lichtbandes abgenommen werden könnten, um erst am Boden in Einzelteile zerlegt zu werden.

Der Erfindung liegt daher die Aufgabe zugrunde, einen Schnellverschluß für Leuchteneinsätze der eingangs genannten Art zu schaffen, der es in freizügiger Weise gestattet, alternativ einen Leuchteneinsatz zusammen mit dem Reflektor in einem Schritt zu montieren bzw. zu demontieren oder diese Montageschritte einzeln nacheinander auszuführen.

Bei einem Schnellverschluß der eingangs genannten Art wird diese Aufgabe erfindungsgemäß durch die im Kennzeichen des Patentanspruches 1 angegebenen Merkmale gelöst.

Bei der erfindungsgemäßen Lösung sitzen die Schnellverschlüsse nicht mehr in der Tragschiene, sie sind stattdessen in den Leuchteneinsätzen befestigt. Die Schnellverschlüsse sind weiterhin so ausgebildet, daß ein Leuchteneinsatz bequem an die Tragschiene angesetzt werden kann und allein durch Andrücken an das Tragschienenprofil montiert wird. In diesem Montageschritt verdrehen sich die Schnellverschlüsse des Leuchteneinsatzes unter Federvorspannung um einen vorgegebenen Winkelbereich und schnellen unter Ausnützung dieser Federvorspannung zurück, sobald der Leuchteneinsatz an der Tragschiene richtig aufsitzt. Damit hängt der Leuchteneinsatz bereits an der Tragschiene und läßt sich durch eine bequeme Drehung der Schnellverschlüsse fest verriegeln.

Dabei ist es gleichgültig, ob der Reflektor an dem Leuchteneinsatz am Boden bereits montiert wurde oder nicht. War dies nicht der Fall, so lassen sich die Drehknöpfe der Schnellverschlüsse am montierten Leuchteneinsatz, ohne ihn von der Tragschiene zu lösen, über die Verriegelungsstellung hinaus in eine weitere Rastposition drehen, in der dann der Reflektor erst im nachhinein angesetzt werden kann. Dazu sind in an sich bekannter Weise in dem Reflektor entsprechend ausgeformte Ausschnitte vorgesehen, durch die hindurch der Reflektor über die flachen Drehknöpfe der Schnellverschlüsse geschoben wird. Ist der Reflektor angesetzt, so werden die Schnellverschlüsse durch Zurückdrehen der Drehknöpfe in ihre Verriegelungsstellung gebracht, in deren auch der Reflektor am Leuchteneinsatz sicher festgelegt ist.

Weiterbildungen der Erfindung und besonders vorteilhafte Ausgestaltungen sind in Unteransprüchen beschrieben. Diese Ausgestaltungen und weitere Vorteile der Erfindung werden im folgenden bei der näheren Beschreibung von Ausführungsbeispielen der Erfindung noch erläutert. Diese Beschreibung von Ausführungsbeispielen der Erfindung erfolgt anhand der Zeichnung. Dabei zeigt:
Figur 1 in einer Explosionsdarstellung schematisch den Aufbau eines Lichtbandes bestehend aus Tragschiene, Leuchteneinsatz mit dem erfindungsgemäßen Schnellverschluß und einem Reflektor,
Figur 2 in einem Schnitt schematisch dieses Lichtband nach Figur 1 in montiertem Zustand,
Figur 3 und Figur 4 je eine Einzelansicht des kompletten Schnellverschlusses von der Seite bzw. von oben,
Figur 5 in einer Explosionsdarstellung die Einzelteile dieses Schnellverschlusses,
Figur 6 in einem Querschnitt den Drehknopf dieses Schnellverschlusses,
Figur 7 als weiteres Einzelteil dieses Schnellverschlusses in einer dreidimensionalen Teildarstellung ein Federelement dieses Schnellverschlusses und
Figur 8 eine Übersichtsdarstellung zur Erläuterung der Funktion des Schnellverschlusses in seinen verschiedenen Winkelpositionen bezüglich des Leuchteneinsatzes.

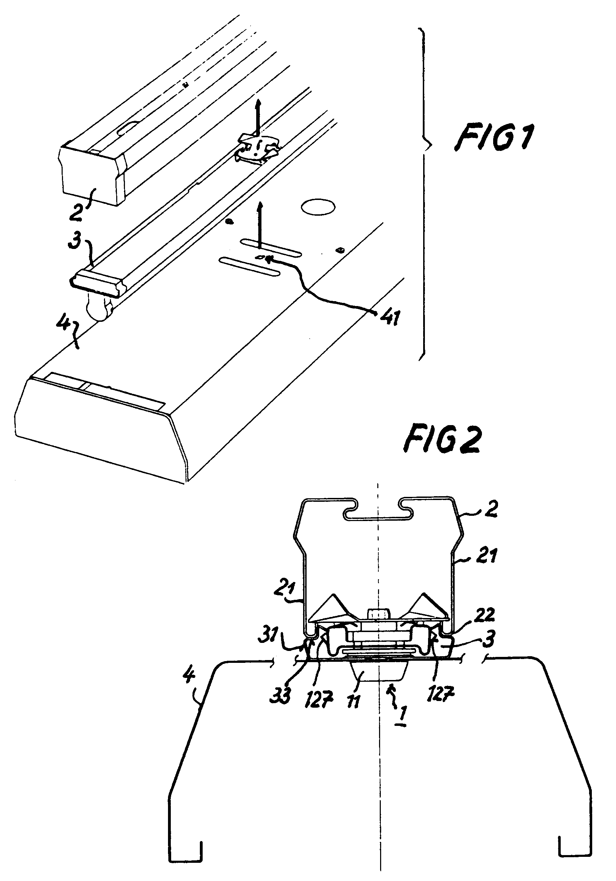

Figur 1 zeigt in einer schematischen Übersicht den grundsätzlichen Aufbau eines Lichtbandes, bei dem ein erfindungsgemäßer Schnellverschluß 1 eingesetzt wird. Tragendes Element dieses Lichtbandes ist eine Tragschiene 2 mit im wesentlichen nach unten offenem, U-förmigem Profil. Diese Tragschiene nimmt Leuchteneinsätze 3 auf, die ein flaches, wannenförmiges Profil besitzen, das beim Ansetzen an die Tragschiene 1 bis zu einer Schulter in das Tragschienenprofil hineingeschoben wird. Beim Aufsetzen eines Leuchteneinsatzes 3 auf die Tragschiene 2 verdreht sich der in Figur 1 schematisch dargestellte Schnellverschluß 1 unter Federvorspannung und schnappt in das Profil der Tragschiene 2 ein, sobald der Leuchteneinsatz 3 richtig an der Tragschiene 2 anliegt. Im Leuchteneinsatz 3 sind - in Figur 1 nicht dargestellt und für die vorliegende Erfindung auch nicht wesentlich - alle elektrischen, gegebenenfalls elektronischen und sonstigen mechanischen Bauteile vormontiert, die für den Betrieb der Leuchte erforderlich sind. Wie Figur 1 weiter zeigt, ist an einem montierten Leuchteneinsatz 3 seinerseits ein Reflektor 4 zu befestigen, der zu diesem Zweck an der Stelle, an der im Leuchteneinsatz 3 ein Schnellverschluß 1 sitzt, jeweils einen länglichen Ausschnitt 41 aufweist. Wie noch im einzelnen zu erläutern sein wird, dient dieser Ausschnitt 41 zur Aufnahme eines Drehknopfes des Schnellverschlusses 1, so daß der Reflektor 4 durch Verdrehen des Schnellverschlusses 1 an dem Leuchteneinsatz lösbar zu befestigen ist.

Figur 2 zeigt in einem Querschnitt das anhand von Figur 1 im Prinzip erläuterte Lichtband im montierten Zustand. In dieser Darstellung wird deutlicher, daß die Seitenwände 21 der Tragschiene 2 an ihren freien Enden U-förmig nach innen abgebogen sind. Diese Ausgestaltung der Schenkelenden des Profiles der Tragschiene 2 dient einem doppelten Zweck. Einmal dienen die umgebördelten Ränder 22 der Tragschiene 2 als Anlageflächen für einen Tragrahmen 31 des Leuchteneinsatzes 3. Die Schnittdarstellung von Figur 2 verdeutlicht, daß dieser Tragrahmen 31 des Leuchteneinsatzes 3 im Profil zu einer flachen Wanne ausgebildet ist, deren Seitenwände je eine eingezogene Schulter 32 aufweisen. Diese Schultern 32 bilden die Anlageflächen des Leuchteneinsatzes 3 an der Tragschiene 2. Zum anderen bilden die nach innen umgebogenen Innenkanten der Seitenwände 21 der Tragschiene 2 die Rastflächen, mit denen der Leuchteneinsatz 3 an der Tragschiene 2 mit Hilfe des Schnellverschlusses 1 festgelegt wird. Der Aufbau des Schnellverschlusses 1 kann allein anhand der Figur 2 noch nicht genügend klar erläutert werden, deshalb sei hier nur festgestellt, daß er den Leuchteneinsatz 3 sowie auch den Reflektor 4 an dem Innenrand des Profiles der Tragschiene 2 festlegt.

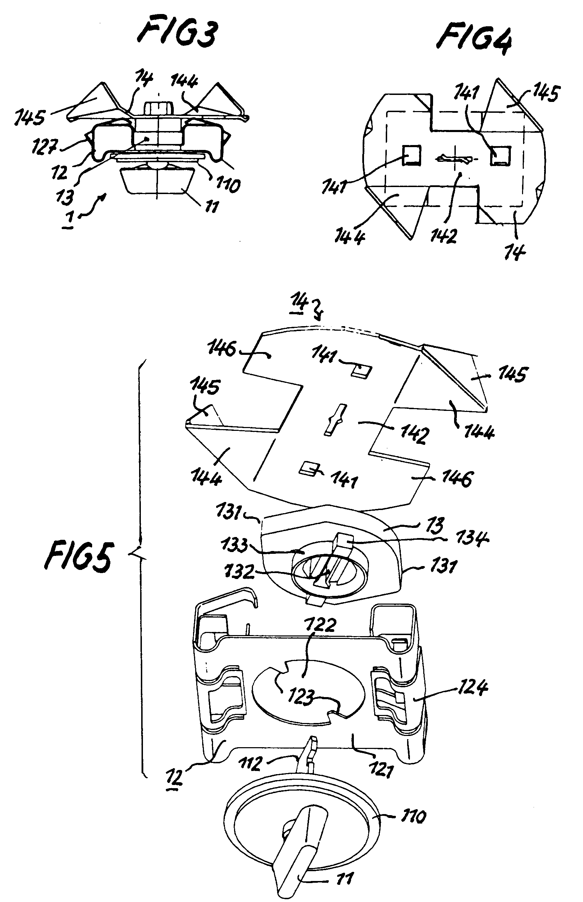

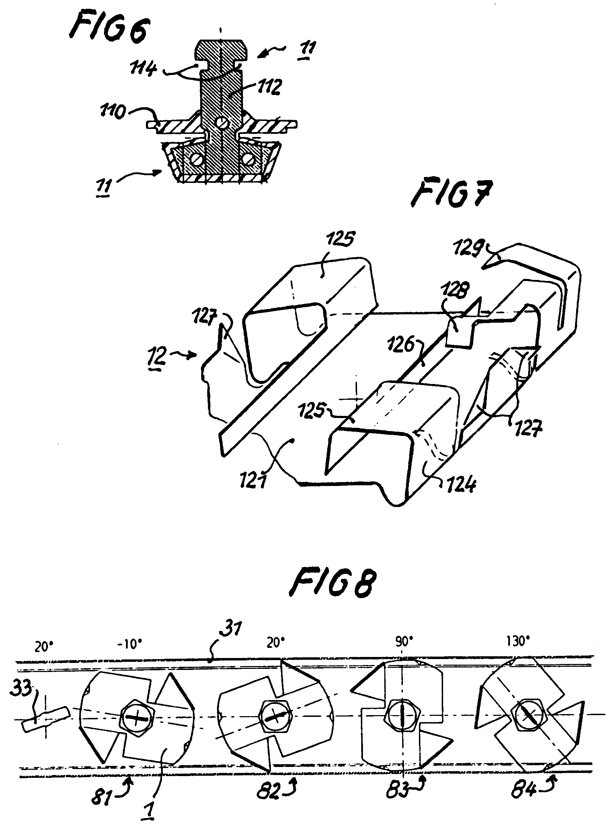

In Figur 3 und Figur 4 ist dieser Schnellverschluß 1 einmal in einer Seitenansicht, die der Ansicht von Figur 2 entspricht bzw. in einer Draufsicht als Einzelteil komplett montiert gezeigt. Der Aufbau dieses so dargestellten Schnellverschlusses 1 wird deutlicher, wenn man Figur 5 zur Hilfe nimmt, in der dieser mit seinen Einzelelementen in einer Explosionsdarstellung gezeigt ist. Daraus ergibt sich nun, daß der Schnellverschluß 1 im wesentlichen aus vier Elementen aufgebaut ist. Er besitzt einen flachen Drehknopf 11 mit einer angespritzen Sicherungsscheibe 110, ein multifunktionales Federelement 12, einen Rastnockenkörper 13 sowie eine Verriegelungsscheibe 14. Diese vier Bauelemente bilden den kompletten Schnellverschluß 1, der im vormontierten Zustand in den Leuchteneinsatz 3 eingesetzt wird.

Der Drehknopf 11 ist in Figur 6 in einem Schnitt dargestellt. Daraus ergibt sich, daß den Kern des Drehknopfes 11 ein teilweise kunststoffumspritztes flaches Blechteil 112 bildet, das im Griffbereich hammerförmig ausgebildet ist. Oberhalb dieses Griffbereiches ist an das Blechteil 112 die Sicherungsscheibe 110 angespritzt. Im Bereich des oberen Endes weist das Blechteil zwei einander gegenüberliegende Einschnürungen 114 auf.

In Figur 5 und auch in Figur 7 ist das Federelement 12 des Schnellverschlusses 1 jeweils in verschiedenen Ansichten dreidimensional dargestellt. Es ist aus einem flachen Federblech hergestellt, das mehrfach abgekröpft ist. Dieses Federelement 12 besitzt eine flache Bodenplatte 121, in die zentral (in Figur 7 nicht dargestellt) eine kreisförmige Ausnehmung 122 mit diametral einander gegenüberliegenden Rastsegmenten 123 eingelassen ist. Der Übergangsbereich zwischen dieser Bodenplatte 121 und den Seitenwänden 124 des Federelementes 12 ist vorspringend gewölbt ausgebildet, die Seitenwände 124 selbst sind an ihren freien Enden wiederum nach innen doppelt abgekröpft. Betrachtet man das Federelement 12 von oben, was in Figur 7 am deutlichsten erkennbar ist, so zeigt sich, daß es bezüglich seiner Mittelebene spiegelbildlich symmetrisch ausgebildet ist. Ein erstes Paar von einander diametral gegenüberliegenden Ecken des Federelementes 12 weist doppelt abgekröpfte Bügel 125 auf, die die Basis für zueinander antiparallel stehende Blattfedern 126 bilden. Diese Blattfedern 126 liegen im montierten Zustand des Schnellverschlusses 1 an der Außenkontur des Rastnockenkörpers 13 an. Im Zusammenwirken mit dem Rastnockenkörper 13 bewirken sie einerseits, wenn auch nicht ausschließlich, bestimmte Rastpositionen des Schnellverschlusses 1. Andererseits werden sie durch den Formschluß mit dem Rastnockenkörper 13 durch dessen Außenecken 131 vorspannend ausgelenkt, was insbesondere während des Aufsetzens des Leuchteneinsatzes 3 auf die Tragschiene beim Montagevorgang von Bedeutung ist und noch verdeutlicht wird.

Im zentralen Bereich weist das Federelement 12, nun in der Explosionsdarstellung von Figur 5 aus Vereinfachungsgründen nicht dargestellt, jedoch in Figur 7 illustriert, zu beiden Seiten jeweils ein bis in die Bodenplatte 121 hinein ausgeschnittenes Federteil mit einem Paar von dreieckförmigen, nach außen abgewinkelten Rastnasen 127 auf. In Figur 2 ist am deutlichsten erkennbar, daß der Schnellverschluß 1 mit Hilfe dieser Rastnasen 127 seines Federelementes 12 in dem Tragrahmen 31 des Leuchteneinsatzes 3 festgelegt wird. Dies wird dadurch erreicht, daß in diesem Tragrahmen 31, wie in Figur 8 erkennbar, ein länglicher Ausschnitt 33 vorgesehen ist, durch den der Drehknopf 11 steckbar ist. Beim Aufsetzen des Schnellverschlusses 1 auf den Tragrahmen 31 gleiten die Rastnasen 127 unter Verformung der Seitenwände des Mittelteiles des Federelementes über die Innenkanten des Profiles des Tragrahmens 31 des Leuchteneinsatzes 3. Schließlich hintergreifen die Rastnasen 127 des Federelementes 12 die Innenkanten des Profiles des Tragrahmens 31 des Leuchteneinsatzes und verrasten damit den Schnellverschluß 1 im Tragrahmen 31 des Leuchteneinsatzes 3.

Die anderen Außenecken des Federelementes 12 bilden zwei weitere Blattfedern 128 bzw. 129. Das eine Blattfedernpaar 128 ist parallel zur Längsachse des Federelementes auslenkbar angeordnet, der Kropfung dieses Blattfedernpaares 128 entsprechen zwei rechteckige, auf einer Diagonale der Verriegelungsscheibe 14 angeordnete Ausschnitte 141. Diese Ausschnitte 141 der Verriegelungsscheibe 14 sind auf dieser so angeordnet, daß die Enden der Blattfedern 128 im verriegelten Zustand des Schnellverschlusses 1 darin einfallen und damit diesen Verriegelungszustand als eine der Rastpositionen des Schnellverschlusses 1 sichern.

Die weiteren Blattfedern 129 sind quer zur Längsachse des Federelementes 12 federnd angeordnet. Dieses Paar von Blattfedern 129 stützt sich auf der Unterseite der Verriegelungsscheibe 14 zumindestens in der Position des Schnellverschlusses ab, die er im ausgeklinkten Zustand des Leuchteneinsatzes 3 einnimmt. Der Zweck dieses Federnpaares 129 ist es, einen Massekontakt herzustellen, um einen Monteur zu schützen, sobald das Innere des Leuchteneinsatzes 3 zugänglich wird.

In Figur 5 ist die Ausgestaltung des Rastnockenkörpers 13 wohl am deutlichsten zu erkennen. Er ist als Kunststoffspritzteil ausgeführt und weist in seiner Mittelachse verlaufend einen flachen Führungskanal 132 auf, so daß er auf das Blechteil 112 des Drehknopfes 11 aufsetzbar ist. Im montierten Zustand ist damit der Rastnockenkörper 13 formschlüssig mit dem Drehknopf 11 verbunden. Außerdem weist der Rastnockenkörper 13 an seiner Unterseite einen Bund 133 auf, an dem nach außen weisend und einander diametral gegenüberstehend zwei Zapfen 134 angespritzt sind. Mit diesen Zapfen 134 ist der Rastnockenkörper 13 im montierten Zustand des Schnellverschlusses 1 in der zentralen Ausnehmung 122 des Federelementes 12 geführt. In dieser Ausnehmung 122 entsprechen den Zapfen 134 des Rastnockenkörpers 13 die beiden nach innenweisenden und einander ebenfalls diametral gegenüberstehenden Rastsegmente 123. Im Zusammenwirken der Zapfen 134 des Rastnockenkörpers 13 und dieser Rastsegmente 123 des Federelementes 12 ergibt sich, daß der Drehbereich des Schnellverschlusses 1 etwa auf 180° beschränkt ist.

Im zusammengebauten Zustand liegt der Rastnockenkörper 13 mit seiner Außenkontur zwischen den beiden zueinander antiparallel angeordneten ersten Blattfedern 126. Im Zusammenwirken mit diesem Federnpaar bestimmt damit der Rastnockenkörper 13 einzelne definierte Winkelpositionen des Schnellverschlusses 1, die bei der Montage bzw. Demontage eines Leuchteneinsatzes und/oder eines Reflektors wichtig sind. Der Rastnockenkörper 13 ist deshalb, wie noch zu erläutern sein wird, für die Gesamtfunktion des Schnellverschlusses 1 mit von wesentlicher Bedeutung.

Die in Figur 4 in einer Ansicht von oben und in Figur 5 in einer Ansicht von unten gezeigte Verriegelungsscheibe 14 des Schnellverschlusses 1 ist ein Blechstanzteil, das bezüglich einer Mitteldiagonalen spiegelbildlich symmetrisch ausgebildet ist. Die Verriegelungsscheibe 14 weist einen Mittelsteg 142 auf, dessen Längsachse mit der Symmetrielinie der Verriegelungsscheibe 14 zusammenfällt. In dieser Achse ist zentral ein länglicher Durchbruch vorgesehen, der das Ende des Blechteiles 112 des Drehknopfes 11 aufnimmt. Weiterhin liegen in dieser Achse die beiden rechteckigen Ausschnitte 141, in die im verriegelten Zustand des Schnellverschlusses 1 die zweiten Blattfedern 128 mit ihrer Abkröpfung eingreifen.

An beiden Enden des Mittelsteges 142 ist, einander diametral gegenüberstehend ein Paar von Rastflügeln 144 angeordnet. Diese Rastflügel sind vorzugsweise, wie beispielsweise in Figur 3 gezeigt, um einige Winkelgrade gegenüber der planen Fläche des Mittelsteges 142 nach oben abgewinkelt. Ihre Unterseite bildet damit eine Auflauffläche, die beim Aufsetzen eines Leuchteneinsatzes 3 auf die Tragschiene 2 an den Innenkanten des Tragschienenprofiles ansetzt und beim Einschnappen des Leuchteneinsatzes das Tragschienenprofil hintergreift.

Weiterhin sind diese Rastflügel etwa dreieckförmig nach oben abgewinkelt. Diese dreieckigen Winkel 145 sind beim Ansetzen eines Leuchteneinsatzes 3 an die Tragschiene 2 in einer Position, in der sie in die Schultern 32 des Tragrahmens 31 des Leuchteneinsatzes 3 hineinragen. Beim Einschnappen des Leuchteneinsatzes 3 in das Profil der Tragschiene 2 bilden damit die kurzen Dreieckseiten jedes dieser dreieckigen Winkel 145 Auflaufkanten des Schnellverschlusses 1, die sich an den Außenrändern 22 des Tragschienenprofiles abstützen. Sie werden bei diesem Vorgang durch das Andrücken des Leuchteneinsatzes 3 an die Tragschiene seitlich weggedrückt, d. h. der Schnellverschluß 1 wird dabei unter Vorspannung der ersten Blattfedern 126 etwas gedreht. Sobald die Rastflügel 144 mit ihrer Auflaufkante in das Profil der Tragschiene 2 eingreifen können, kehrt sich die Drehbewegung des Schnellverschlusses 1 unter Ausnutzung der genannten Federvorspannung um, so daß er selbsttätig in das Tragschienenprofil einrastet.

An den beiden anderen Außenecken des Mittelsteges 142 sind schließlich zwei weitere plattenförmige Ansätze 146 vorgesehen, die dazu dienen, den Schnellverschluß 1 in seinen verschiedenen Winkelpositionen unter Ausnutzung der Federkraft der zweiten und dritten Blattfedern 128 bzw. 129 axial zu verspannen und auszurichten, wobei auch der erwähnte Massekontakt bewirkt wird.

Die Explosionsdarstellung des Schnellverschlusses in Figur 5 zeigt wohl am deutlichsten, wie dieser zusammengesetzt wird. Der Drehknopf 11 wird von unten her in die zentrale Ausnehmung 122 des Federelementes 12 eingesetzt und der Rastnockenkörper 13 von oben her auf das Blechteil 112 des Drehknopfes 11 aufgesetzt. Dann wird die Verriegelungsscheibe 14 auf das Ende des Blechteils 112 aufgesetzt, wobei sie in die Einschnürungen 114 des Blechteiles einrastet. Um die Verriegelungsscheibe 14 zu sichern, werden danach die über die Verriegelungsscheibe hinausstehenden Enden des Blechteiles 112 verschränkt. Damit ist die Verriegelungsscheibe 14 formschlüssig an dem Blechteil 112 festgelegt.

Der komplett zusammengebaute Schnellverschluß 1 wird am Tragrahmen 31 eines Leuchteneinsatzes 3 von oben her eingesetzt. Dazu weist dieser Tragrahmen dem Querschnittsprofil des flachen Drehknopfes 11 entsprechend geformte Ausschnitte 33 auf, in die der Drehknopf 11 des Schnellverschlusses 1 eingesteckt wird. Wie sich das Federelement 12 in dem Profil des Tragrahmens 31 eines Leuchteneinsatzes 3 verrastet, wurde bereits vorstehend erläutert. Zu ergänzen sei hier lediglich, daß bei dieser hier vorliegenden Losung, anders als bei bekannten Schnellverschlüssen, dieser Schnellverschluß auch dann nicht etwa aus dem Leuchteneinsatz 3 herausfallen könnte, wenn der Drehknopf 11 gerade über dem Ausschnitt 33 im Tragrahmen 31 steht. Der Drehknopf 11 hat hier bezüglich des Leuchteneinsatzes 3 keinerlei verriegelnde Funktion. Der Schnellverschluß 1 wird im Tragrahmen 31 des Leuchteneinsatzes 3 allein aufgrund des Formschlusses seines Federelementes 12 mit dem Profil des Tragrahmens 31 sicher gehalten.

In Figur 8 ist schematisch und zusammenfassend die Funktion des Schnellverschlusses 1 in seinen verschiedenen, einander gegenübergestellten Drehpositionen illustriert. Schematisch ist der Tragrahmen 31 des Leuchteneinsatzes 3 von oben gezeigt. Zur einfacheren Erläuterung sei eine Nullgrad-Stellung des Schnellverschlusses 1 definiert, in der die Längsachse seines Mittelsteges 142 mit der Längsachse des Tragrahmens 31 zusammenfällt. Dann ist links in der Darstellung von Figur 8 der Ausschnitt 33 für das Einsetzen des Drehknopfes 11 des Schnellverschlusses 1 in einer Winkelposition dargestellt, die im Sinne der obigen Definition beispielsweise 20° beträgt.

In der Position 81 von Figur 8 ist der Schnellverschluß 1 etwa um 10° gegenüber dieser definierten Nullage zurückgedreht. Dies ist die einzige Position, in der die Verriegelungsscheibe 14 des Schnellverschlusses 1 vollständig innerhalb des Profiles des Tragrahmens 31 liegt, in der also dann der Leuchteneinsatz 3 von der Tragschiene 2 abnehmbar ist.

In der rechts daneben dargestellten Position 82 des Schnellverschlusses 1 ist er gegenüber der definierten Nullage - in diesem Beispiel um 20° - entgegen dem Uhrzeigersinn gedreht. Wie das links außen dargestellte Lochbild des Ausschnittes 33 des Tragrahmens 31 zeigt, ist dies einerseits die Position, in der der Schnellverschluß in den Tragrahmen 31 des Leuchteneinsatzes 3 einsetzbar ist. Andererseits ist dies auch die Position, die er beim Ansetzen eines Leuchteneinsatzes 3 an die Tragschiene 2 einnimmt.

Aus dem Vergleich der beiden Positionen 82 und 81 wird deutlich, daß die Verriegelungsscheibe 14, um in das Profil der Tragschiene 2 einschnappen zu können, bei diesem Vorgang in die Position 81 zurückgedreht werden muß. Sie tut dies, wie vorstehend bereits erläutert, unter Zusammenwirkung der von den Außenrändern 22 der Tragschiene 2 weggedrückten Dreiecksseite der dreieckigen Winkel 145 der Verriegelungsscheibe 14 mit den beschriebenen ersten Blattfedern 126 sowie dem Rastnockenkörper 13. Dieses Vorspannen und anschließende selbsttätige Einschnappen der Verriegelungsscheibe 14 des Schnellverschlusses ist wesentlich für einen einfachen Montageschritt, weil dabei eine Betätigung des Schnellverschlusses 1 am Drehknopf 11 völlig unnötig ist.

Darauf hinzuweisen ist auch, daß die dreieckigen Winkel 145 der Verriegelungsscheibe 14 das Ansetzen des Leuchteneinsatzes 3 an das Profil der Tragschiene 2 erleichtern, d. h. für den Monteur eine Zentrierhilfe bieten. Dies ist insbesondere bei langen Leuchteneinsätzen 3 und einer gegebenenfalls ungünstigen Arbeitsposition des Monteurs eine wesentliche Hilfe. Ist der Leuchteneinsatz 3 schließlich richtig in die Tragschiene 2 eingesetzt, so steht der zurückgeschnappte Schnellverschluß 1 wieder in der Position 82 von Figur 8.In dieser Position hängt der Leuchteneinsatz 3 über den eingeschnappten Schnellverschluß 1 an der Tragschiene 2, ist aber noch nicht fest verriegelt. Die Verriegelungsstellung ist erst mit der Drehposition 83 des Schnellverschlusses 1 gegeben.

Wird der Schnellverschluß 1 über diese Verriegelungsstellung von Position 83 hinaus gedreht, so wird schließlich die Position 84 erreicht, in der der Reflektor 4 einzeln am Leuchteneinsatz 3 montierbar bzw. demontierbar ist. Ohne daß dies der Darstellung von Figur 8 unmittelbar zu entnehmen wäre, verdeutlicht aber die 130°-Lage der Längsachse des Schnellverschlusses 1, in welcher Winkellage der entsprechende Ausschnitt 41 des Reflektors 4 für den Durchtritt des Drehknopfes 11 des Schnellverschlusses 1 angeordnet sein muß.

Diese 130°-Position 84 ist eine der beiden Endstellungen im Drehbereich des Schnellverschlusses 1. Somit ist auch hier eine Montagehilfe geboten, da ein Monteur den Drehknopf lediglich in diese Endstellung zu drehen braucht, um den Schnellverschluß 1 für Montage bzw. Demontage des Reflektors 4 richtig und eindeutig zu positionieren. Es sei nochmals darauf hingewiesen, daß der Leuchteneinsatz 3 auch in dieser Position, wie Figur 8 unmittelbar entnehmbar ist, eindeutig und sicher an der Tragschiene 2 verriegelt ist und deshalb keineswegs die Gefahr besteht, daß sich ein Leuchteneinsatz bei Montage bzw. Demontage eines Reflektors von der Tragschiene lösen könnte.

Umgekehrt ist die Position 84 die einzige Position, in der sich ein Reflektor 4 vom Leuchteneinsatz 3 lösen kann. Daraus ergibt sich auch, daß ein Reflektor 4 am Leuchteneinsatz 3 ohne weiteres festgelegt werden kann, ohne daß dieser Leuchteneinsatz 3 bereits in die Tragschiene 2 eingesetzt sein müßte. Ebenso läßt sich eine Einheit, bestehend aus Leuchteneinsatz 3 und montiertem Reflektor 4, auch in einem einzigen Demontageschritt durch Drehen der Schnellverschlüsse 1 in die Position 81 gemeinsam von der Tragschiene 2 abnehmen. Diese Hinweise verdeutlichen, daß die Montage oder auch Demontage in jeder beliebigen Folge von Einzelschritten vorzunehmen ist und der beschriebene Schnellverschluß bei einfacher Funktion werkzeuglos jede Montagefolge erlaubt, die in der Praxis gewünscht werden kann.

## Patentansprüche

1. Schnellverschluß zum lösbaren Befestigen von Leuchtenelementen (z. B. 3) an einem tragenden Element (z. B. 2) eines Leuchtensystems, wobei der Schnellverschluß (1) einen von Hand betätigbaren Drehknopf (11) mit vorgegebenen Rastpositionen (81 bis 84) besitzt und der gegebenenfalls in Ausschnitte (z. B. 41) eines der Leuchtenelemente (3 bzw. 4) eingesteckt dieses durch Drehen verriegelt, **dadurch gekennzeichnet,** daß der Schnellverschluß in einem als Leuchteneinsatz (3) ausgebildeten Leuchtenelement drehbeweglich festgelegt ist sowie Rastmittel (12, 13, 14) zum selbsttätigen Vorspannen entgegen seiner Verriegelungsrichtung aufweist, die beim Aufsetzen des Leuchteneinsatzes auf das tragende Element (2) gespannt werden und in Einbaulage des Leuchteneinsatzes im tragenden Element einrasten.

2. Schnellverschluß nach Anspruch 1 zur Verwendung bei einem Leuchtensystem, bei dem das tragende Element (2) ein Hohlprofil mit einem einseitig offenen, durch einander gegenüberstehend nach innen ragende Aufnahmeflächen (22) für den Leuchteneinsatz (3) begrenzten Querschnitt, **dadurch gekennzeichnet,** daß die Rastmittel (12, 13, 14) des Schnellverschlusses (1) paarweise ausgebildet sind, die bei gleichmäßiger Verteilung der auf den Schnellverschluß einwirkenden Kräfte gleichzeitig mit beiden randseitigen Aufnahmeflächen (22) des tragenden Elementes (2) zusammenwirken.

3. Schnellverschluß nach Anspruch 1 oder 2, **gekennzeichnet durch** ein Befestigungselement (12) mit dem er am Leuchteneinsatz (3) festlegbar ist, wobei an dem Befestigungselement auf einer Seite als Betätigungsmittel der Drehknopf (11) und auf der anderen Seite Verriegelungsmittel (14) drehbeweglich, jedoch axial unter Federvorspannung stehend nur geringfügig verschiebbar angeordnet sind.

4. Schnellverschluß nach Anspruch 3, **dadurch gekennzeichnet,** daß das Befestigungselement selbst als Federelement (12) ausgebildet ist und daß die Rastmittel ein in einer zur Zentralachse des Schnellverschlusses (1) senkrechten Ebene einander gegenüberliegend angeordnetes, in das Federelement (12) integriertes erstes Federpaar (126) sowie einen auf der Achse des Schnellverschlusses angeordneten Rastnockenkörper (13) umfassen, wobei das erste Federpaar und der Rastnockenkörper im Zusammenwirken miteinander elastische Vorspann- sowie statische Rastpositionen des Schnellverschlusses festlegen.

5. Schnellverschluß nach Anspruch 4, **dadurch gekennzeichnet,** daß das erste Federpaar (126) antiparalleler angeordnet, jeweils als Blattfeder ausgebildet und mit einem Ende jeweils an einer von zwei diametral einander gegenüberstehenden Ecken des Federelementes (12) festgelegt ist sowie mit seiner Breitseite an der Außenkontur des Rastnockenkörpers (13) federnd aufliegt.

6. Schnellverschluß nach einem der Ansprüche 3 bis 5, **dadurch gekennzeichnet,** daß das Verriegelungsmittel (14) scheibenförmig ausgebildet ist und einander diametral gegenüberstehend ein Paar von Rastflügeln (144) aufweist, die in einer Verriegelungsposition (82 bzw. 83) des Schnellverschlusses (1) über die Seitenränder des Leuchteneinsatzes (3) vorstehend und in seinem montierten Zustand hinter Aufnahmeflächen (22) am tragenden Element (2) einrastend den Leuchteneinsatz am tragenden Element (2) festlegen.

7. Schnellverschluß nach Anspruch 6, **dadurch gekennzeichnet,** daß die Rastflügel (144) des Verriegelungselementes (14), eine Auflauffläche bildend, gegenüber der im wesentlichen horizontalen Ausrichtung des Verriegelungselementes schräg nach außen verlaufend nach oben abgekantet sind.

8. Schnellverschluß nach Anspruch 6 oder 7, **dadurch gekennzeichnet,** daß die Rastflügel (144) des Verriegelungselementes (14) an einer Außenkante je einen in Richtung der Achse des Schnellverschlusses (1) abgebogenen, dreieckigen Winkel (145) tragen, wobei eine der Dreiecksseiten dieses Winkels beim Montieren des Leuchteneinsatzes (3) am tragenden Element (2) eine Auflaufkante bildet und im Zusammenwirken mit den Innenkanten des Profils des tragenden Elementes das Verriegelungselement (14) unter Vorspannung des ersten Federpaares (126) zurückdreht, bis es hinter diese Innenkanten eingreift und in umgekehrter Drehrichtung mit seinen Rastflügeln einrastet.

9. Schnellverschluß nach einem der Ansprüche 6 bis 8, **dadurch gekennzeichnet,** daß das Verriegelungselement (14) zwei in einer Diagonalen und achsensymmetrisch angeordnete zwei Ausschnitte (141) aufweist und in das Federelement (12) ein zweites Federpaar (128) spiegelbildlich symmetrisch integriert ist, das in der Verriegelungsposition (83) des Schnellverschlusses (1) in diese beiden Ausschnitte (141) rastend eingreift.

10. Schnellverschluß nach Anspruch 9, **dadurch gekennzeichnet,** daß das zweite Federpaar (128) abgekröpft ausgebildet ist und zu beiden Seiten des Federelementes (12) zueinander antiparallel stehend angeordnet ist.

11. Schnellverschluß nach einem der Ansprüche 9 oder 10, **dadurch gekennzeichnet,** daß das Federelement (12) ein drittes Federpaar mit geköpften Blattfedern (129) aufweist, die aneinander diametral gegenüberliegenden Ecken des Federelementes angelenkt sind und sich am Verriegelungsmittel (14) zumindestens in der Position des Schnellverschlusses (1) abstützen, in der der Leuchteneinsatz (3) von dem tragenden Element (2) abnehmbar ist.

12. Schnellverschluß nach einem der Ansprüche 4 bis 11, **dadurch gekennzeichnet,** daß das Federelement (12), paarweise an seinen Längsseiten angeordnet, nach außen abgewinkelte Rastnasen (127) aufweist und diesen im Leuchteneinsatz (3) ein Tragprofil (31) mit nach innen vorstehenden Arretierungsflächen entspricht, hinter denen die Rastnasen beim Einsetzen des Schnellverschlusses (1) in den Leuchteneinsatz rastend eingreifen.

13. Schnellverschluß nach einem der Ansprüche 6 bis 12, **dadurch gekennzeichnet,** daß der Drehknopf (11) ein Kernblech (112) aufweist, das an einem Ende hammerförmig ausgebildet ist und an diesem Ende mit Kunststoff umspritzt ist sowie diesem Ende zugeordnet eine kreisförmig ausgebildete Sicherungsscheibe (114) aufweist.

14. Schnellverschluß nach Anspruch 13, **dadurch gekennzeichnet,** daß das Federelement (12) in seiner Bodenplatte (121) eine zentrale Ausnehmung (122) mit einander diametral gegenüberliegeriden, nach innen vorspringenden Rastsegmenten (123) aufweist, daß der Rastnockenkörper (13) einen axialen Führungskanal (132) für das Kernblech (112) des Drehknopfes (11) aufweist sowie auf der Unterseite einen konzentrischen Bund (133) mit radial vorstehenden Zapfen (134) aufweist, die in die zentrale Ausnehmung (122) des Federelementes eingreifen und daß das Verriegelungselement (14) einen zentralen Ausschnitt (141) zum Aufnehmen des dem Drehknopf (11) gegenüberliegenden Endes des Kernbleches (112) aufweist, wobei dieses Ende des Kernbleches in dem Verriegelungselement (14) durch Verschränken seiner hervorstehenden Außenecken festgelegt ist.
